# EUROPEAN PATENT APPLICATION

(11) **EP 4 647 627 A1**
(43) Date of publication of application: **12.11.2025**
(21) Application number: 23928510.9
(22) Date of filing: 17.03.2023
(51) Int. Cl.: F16D 23/12, F16D 28/00, F16D 48/06

(54) **CLUTCH CONTROL DEVICE**

(71) Applicant: HONDA MOTOR CO., LTD., Tokyo 105-8404 (JP)
(72) Inventor: ONO Junya, Tokyo 107-8556 (JP); FUJIMOTO Yasushi, Tokyo 107-8556 (JP); KANO Junichiro, Wako-shi, Saitama 351-0193 (JP); KUDO Takashi, Tokyo 107-8556 (JP); TSUZUKI Ryohei, Tokyo 107-8556 (JP)
(74) Representative: Kiwit, Benedikt
(86) International application number: PCT/JP2023/010589
(87) International publication number: WO 2024/194925

(57) **Abstract**

A clutch control device (50) includes a release shaft (53) that transmits an input from at least one of a clutch actuator (60) and a clutch operation element to a clutch device (40). The release shaft (53) includes: a first release shaft (55) that receives a force of the operation by a driver and then rotates; a second release shaft (57) that receives an input from the clutch actuator (60) and then rotates; and a third release shaft (56) including an engaging portion (56a) that overlaps the first release shaft (55) and the second release shaft (57) in an axial direction and that faces the first release shaft (55) and the second release shaft (57) in a circumferential direction, the engaging portion (56a) individually receiving rotation of the first release shaft (55) and rotation of the second release shaft (57), then rotating, and actuating the clutch device (40). The clutch control device (50) further includes a bearing (90) that holds the engaging portion (56a).

## Description

### TECHNICAL FIELD

The present invention relates to a clutch control device.

### BACKGROUND ART

A clutch control device has been conventionally known, including a clutch actuator that outputs driving force for actuating a clutch device, and automatically performing a connection and disconnection operation of the clutch device with electric control. Furthermore, as this type of clutch control device, there is a clutch control device with which the driver is able to manually perform the connection and disconnection operation of the clutch device using a clutch lever (see, for example, Patent Document 1). Patent Document 1 discloses a clutch operation device including an operation mechanism that includes a first arm member and a second arm member that are independently operable and that cause a clutch mechanism to perform the connection and disconnection operation in accordance with an operation on the first arm member and the second arm member, a clutch lever that is coupled to the first arm member through a first cable to manually operate the first arm member through the first cable, and a clutch drive motor that is coupled to the second arm member through a second cable to operate the second arm member through the second cable.

### Citation List

### Patent Document

Patent Document 1: Japanese Unexamined Patent Application, First Publication No. 2005-106246

### SUMMARY OF INVENTION

### Technical Problem

In the clutch control device capable of automatically and manually performing the connection and disconnection operation of the clutch device, by the way, there is a demand for mutual intervention of the automatic operation and the manual operation smoothly.

The present invention provides a clutch control device that enables mutual intervention of an automatic connection and disconnection operation and a manual connection and disconnection operation of a clutch device smoothly. Furthermore, an object of the present application is to improve operation performance of the connection and disconnection operation of the clutch device. In addition, such an object further improves traffic safety and contributes to development of a sustainable transportation system, accordingly.

### Solution to Problem

A clutch control device according to a first aspect of the present invention, includes: a clutch actuator (60) that outputs driving force for actuating a clutch device (40); a clutch operation element on which a clutch operation by an occupant is performed; and a release shaft (53) that transmits an input from at least one of the clutch actuator (60) and the clutch operation element to the clutch device (40), in which the release shaft (53) includes: a first release shaft (55) that receives a force of the operation by a driver and then rotates; a second release shaft (57) that receives an input from the clutch actuator (60) and then rotates; and a third release shaft (56) including an engaging portion (56a) that overlaps the first release shaft (55) and the second release shaft (57) in an axial direction and that faces the first release shaft (55) and the second release shaft (57) in a circumferential direction, the engaging portion (56a) individually receiving rotation of the first release shaft (55) and rotation of the second release shaft (57), then rotating, and actuating the clutch device (40), and the clutch control device further includes a bearing (90) that holds the engaging portion (56a).

According to the first aspect, the engaging portion of the third release shaft is held by the bearing, and thus the bearing is disposed to surround the engaging place between the first release shaft and the second release shaft, and the third release shaft. Therefore, the radial displacement of each release shaft is restricted by the bearing, so that collapse of the first release shaft and the second release shaft with respect to the third release shaft can be suppressed. This enables the rotation of the first release shaft to be efficiently transmitted to the third release shaft. In addition, the rotation of the second release shaft can be efficiently transmitted to the third release shaft. Therefore, it becomes possible to smoothly conduct mutual intervention of the manual connection and disconnection operation of the clutch device for rotating the third release shaft via the first release shaft and the automatic connection and disconnection operation of the clutch device for rotating the third release shaft via the second release shaft.

The clutch control device according to a second aspect of the present invention, in the clutch control device according to the above first aspect, the first release shaft (55) may include a first engaged portion (55a) that faces the engaging portion (56a) in the circumferential direction, and the bearing (90) may hold the engaging portion (56a) and the first engaged portion (55a).

According to the second aspect, the collapse of the first release shaft with respect to the third release shaft can be effectively suppressed. Therefore, the rotation of the first release shaft can be efficiently transmitted to the third release shaft, and the connection and disconnection operation of the clutch device can be smoothly performed manually.

The clutch control device according to a third aspect of the present invention, in the clutch control device according to the above first aspect or the second aspect, the second release shaft (57) may include: a gear (67) that transmits the driving force from the clutch actuator (60); a second engaged portion (57a) that faces the engaging portion (56a) in the circumferential direction; a circumferential wall (81) in which a first through hole (83) to be inserted by the third release shaft (56) is formed; and a bearing holder (82) in which a second through hole (84) is formed, the second through hole (84) being continuous with the first through hole (83) and larger in diameter than the first through hole (83), and which holds the bearing (90) thereinside.

According to the third aspect, since the radial displacement of the second release shaft and the third release shaft is mutually restricted, and thus it becomes possible to suppress the displacement of the second release shaft and the third release shaft from desired relative positions and actuation of them. Accordingly, mutual interference of the manual connection and disconnection operation and the automatic connection and disconnection operation of the clutch device is suppressed, so that mutual intervention of the manual connection and disconnection operation and the automatic connection and disconnection operation of the clutch device can be more smoothly performed. In addition, the bearing can be held between the first release shaft and the second release shaft through which the first release shaft is inserted, so that the clutch control device, which exhibits the above operation and effects, is obtainable without provision of a holding structure of the bearing in a casing or the like of the clutch control device. Advantageous Effects of Invention

According to the above clutch control device, mutual intervention of the automatic connection and disconnection operation and the manual connection and disconnection operation of the clutch device is enabled smoothly.

### BRIEF DESCRIPTION OF DRAWINGS

[FIG. 1] A right side view of a motorcycle according to one embodiment.
[FIG. 2] A cross-sectional view illustrating a part of a power unit according to one embodiment.
[FIG. 3] A cross-sectional view illustrating a clutch control device according to a first embodiment.
[FIG. 4] A transverse cross-sectional view of a release shaft according to the first embodiment.
[FIG. 5] A transverse cross-sectional view of the release shaft illustrated in FIG. 4, and a view illustrating driving of an upper release shaft and a lower release shaft by a clutch actuator.
[FIG. 6] A transverse cross-sectional view of the release shaft illustrated in FIG. 4, and a view illustrating driving of an intermediate release shaft and the lower release shaft in accordance with a manual operation.
[FIG. 7] A transverse cross-sectional view of the release shaft illustrated in FIG. 4, and a view illustrating a state in which the manual operation intervenes in driving the lower release shaft by the clutch actuator.
[FIG. 8] A perspective view illustrating the intermediate release shaft according to the first embodiment.
[FIG. 9] A right side view illustrating a clutch cover and the clutch actuator according to the first embodiment.
[FIG. 10] A block diagram of a transmission system according to the first embodiment.
[FIG. 11] An explanatory view illustrating transition of a clutch control mode of the motorcycle according to the first embodiment.
[FIG. 12] A cross-sectional view illustrating a clutch control device according to a second embodiment.

### DESCRIPTION OF EMBODIMENTS

Hereinafter, embodiments of the present invention will be described with reference to the drawings. Note that in the following description, constitutions having the same or similar functions are denoted by the same reference numbers. In addition, redundant descriptions of these constitutions will be omitted, in some cases. In addition, in the following description, directions such as front, rear, up, down, left, and right coincide with directions with respect to a vehicle to be described below. That is, an up-down direction coincides with a vertical direction, and a left-right direction coincides with a vehicle width direction. Further, in the drawings to be used in the following description, an arrow UP indicates upward, an arrow FR indicates forward, and an arrow LH indicates leftward.

### <Entire Vehicle>

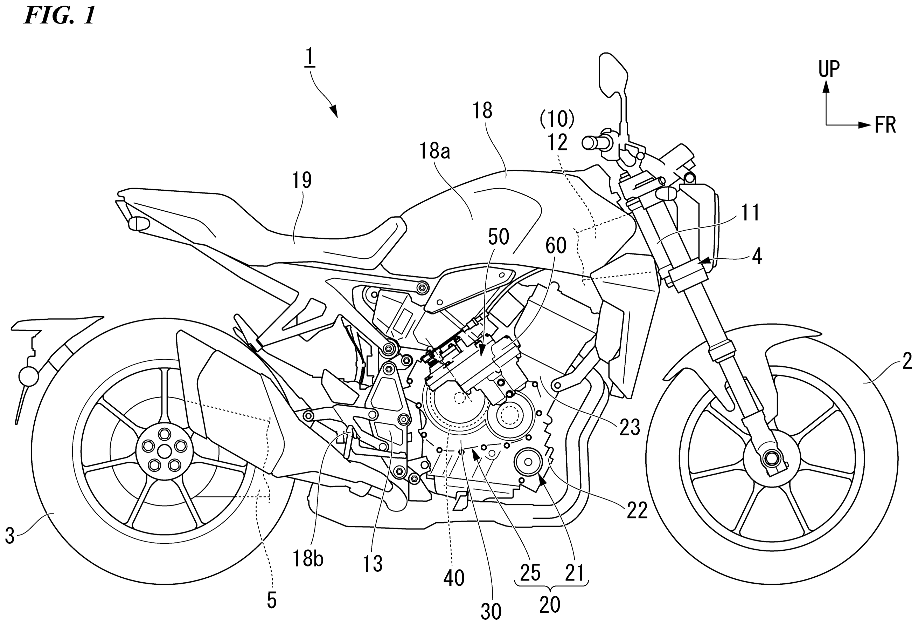

FIG. 1 is a right side view of a motorcycle according to one embodiment.

As illustrated in FIG. 1, a motorcycle 1 according to the present embodiment is a saddle-ride vehicle. The motorcycle 1 includes a front wheel 2, a rear wheel 3, a vehicle body frame 10, a power unit 20, and a clutch control device 50.

The vehicle body frame 10 includes a head pipe 11, a main frame 12, a pivot frame 13, and the like, which are integrally coupled together by welding or the like. The head pipe 11 is provided at a front end of the vehicle body frame 10. The head pipe 11 supports a steering stem of a front wheel suspension device 4. The front wheel 2 is supported by the front wheel suspension device 4. The main frame 12 extends rearward and downward from the head pipe 11. The pivot frame 13 extends downward from a rear end portion of the main frame 12. A front end portion of a swing arm 5 is swingably supported by a lower portion of the pivot frame 13. The rear wheel 3 is supported at a rear end portion of the swing arm 5. Note that the vehicle body frame 10 is not limited to the above constitution.

A fuel tank 18 is supported on the top of the main frame 12. A seat 19 is disposed on a rear side of the fuel tank 18. A knee grip portion 18a, which is recessed inward in a vehicle width direction, is formed at a rear portion of the fuel tank 18. The knee grip portions 18a are formed on both left and right sides of the fuel tank 18. The knee grip portions 18a are formed to be located inside the periphery of the left and right knees of the driver who is seated on the seat 19. A step 18b is disposed below the seat 19. On the step 18b, the driver places his/her foot.

The power unit 20 is supported by the vehicle body frame 10 so as not to be relatively displaced. The power unit 20 integrally includes an engine 21, a transmission 25, and a clutch device 40. The engine 21 is provided at a front portion of the power unit 20. The transmission 25 is provided at a rear portion of the power unit 20.

The engine 21 includes: a crankshaft extending in the vehicle width direction; a crankcase 22, which accommodates the crankshaft; and a cylinder 23, which stands forward and upward from the crankcase 22. The crankcase 22 is disposed below the main frame 12 in a side view. The cylinder 23 is integrally coupled to the crankcase 22. A piston is fitted in the cylinder 23. The reciprocating motion of the piston is converted into rotational motion of the crankshaft via a connecting rod. The crankcase 22 is made of metal.

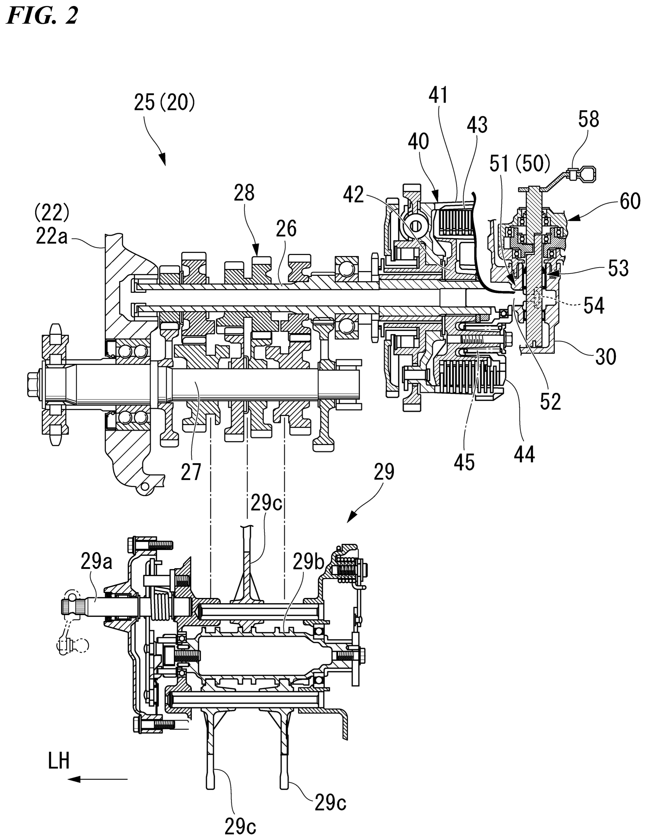

FIG. 2 is a cross-sectional view illustrating a part of a power unit according to one embodiment.

As illustrated in FIG. 2, the transmission 25 is accommodated in a rear portion of the crankcase 22. The rear portion of the crankcase 22 also serves as a transmission case 22a, which accommodates the transmission 25. The transmission 25 is a stepped transmission including: a main shaft 26 and a counter shaft 27, which are rotatably supported by the transmission case 22a; a shift gear group 28, which extends over the main shaft 26 and the counter shaft 27; and a change mechanism 29, which switches a gear pair used for power transmission between the main shaft 26 and the counter shaft 27 in the shift gear group 28. The main shaft 26 and the counter shaft 27 each extend in the vehicle width direction. The counter shaft 27 constitutes an output shaft of the power unit 20. The counter shaft 27 protrudes to the left side of the transmission case 22a, and is coupled to a drive sprocket. The rotation of the counter shaft 27 is transmitted from the left side of the transmission case 22a to the rear wheel 3 through a chain drive type of power transmission mechanism.

The main shaft 26 and the counter shaft 27 are disposed to be aligned in a front-rear direction on a rear side of the crankshaft. The clutch device 40 is coupled to a right end portion of the main shaft 26. The rotational power of the crankshaft is transmitted to the main shaft 26 through the clutch device 40, and is transmitted from the main shaft 26 to the counter shaft 27 through an optional gear pair of the shift gear group 28.

The change mechanism 29 is accommodated in the transmission case 22a. The change mechanism 29 includes a shift drum 29b, which has a hollow cylindrical shape, and which is parallel to the main shaft 26 and the counter shaft 27. The change mechanism 29 actuates a plurality of shift forks 29c with the rotation of the shift drum 29b. The shift fork 29c is actuated in accordance with a pattern of lead grooves formed on an outer circumference of the shift drum 29b. The change mechanism 29 switches a gear pair used for transmitting dynamic power between the main shaft 26 and the counter shaft 27 in the shift gear group 28 in accordance with the actuation of the shift fork 29c.

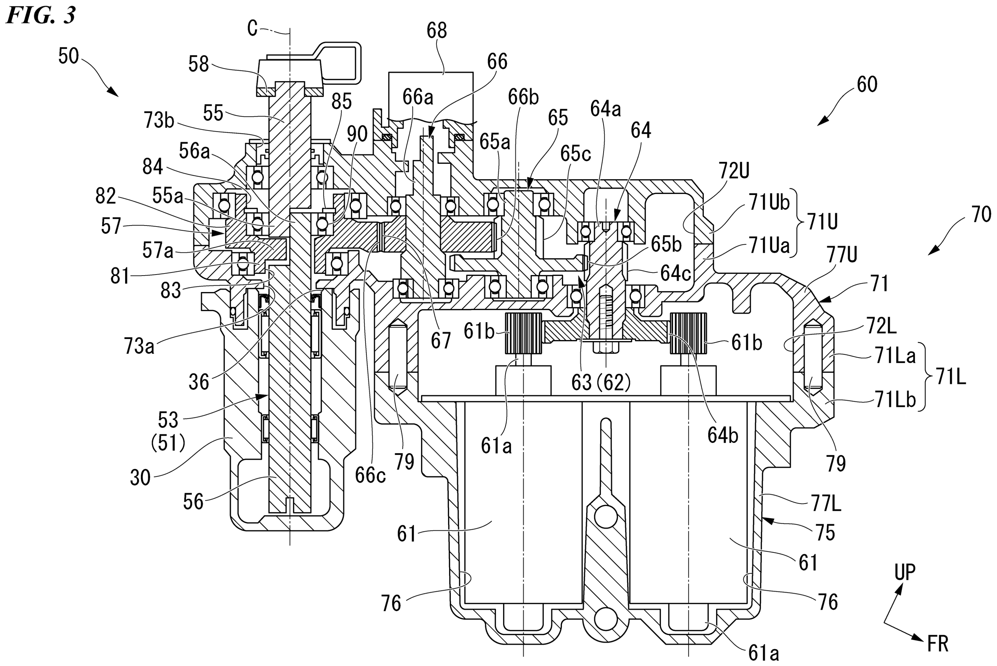

A clutch cover 30 is coupled to the transmission case 22a. The clutch cover 30 is disposed on the right side of the transmission case 22a, and is coupled to the crankcase 22. The clutch cover 30 is disposed on an extension of the main shaft 26. The clutch cover 30 defines a clutch chamber between the clutch cover 30 and the right crankcase 22. A shaft insertion portion 36 through which a release shaft 53 is inserted is formed on the clutch cover 30 (see FIG. 3).

The clutch device 40 is a multiple disc friction clutch that connects and disconnects power transmission between the crankshaft of the engine 21 and the main shaft 26 of the transmission 25. The clutch device 40 is disposed in a clutch chamber between the clutch cover 30 and the crankcase 22.

The clutch device 40 is a wet multi-plate clutch in which a plurality of clutch plates 43 are stacked in an axial direction. The clutch device 40 includes: a clutch outer 41; a clutch center 42; and the plurality of clutch plates 43.

The clutch outer 41 is driven by the rotational power transmitted from the crankshaft all the time. The clutch center 42 is disposed in the clutch outer 41, and is integrally and rotatably supported by the main shaft 26. The plurality of clutch plates 43 are stacked between the clutch outer 41 and the clutch center 42. The plurality of clutch plates 43 are frictionally engaged with the clutch outer 41 and the clutch center 42.

A pressure plate 44 having substantially the same diameter as those of the clutch plates 43 is disposed on the right side (an outer side in the vehicle width direction) of the clutch plates 43 that are stacked. The pressure plate 44 receives a resilient load of a clutch spring 45, is biased leftward, and brings the clutch plates 43 that are stacked into pressure contact with each other (frictional engagement). Accordingly, the clutch device 40 is brought into a connection state to be capable of transmitting the dynamic power. The clutch device 40 is a normally closed clutch that is in a connection state in a normal state with no external input.

The pressure contact (the frictional engagement) between the clutch plates 43 is released by the actuation of a release mechanism 51 inside the clutch cover 30. The release mechanism 51 is actuated by at least one of operation on a clutch lever (a clutch operation element) by an occupant, and application of torque by a clutch actuator 60.

### (First Embodiment)

The clutch control device 50 according to the first embodiment includes: the release mechanism 51; and the clutch actuator 60, which outputs driving force for actuating the clutch device 40. The release mechanism 51 includes: a lifter shaft 52; and the release shaft 53.

The lifter shaft 52 has a central axis along the vehicle width direction. The lifter shaft 52 is held in a right side portion of the main shaft 26, and is capable of reciprocating in the vehicle width direction. The release shaft 53 has a central axis C along a direction orthogonal to the vehicle width direction. The release shaft 53 is rotatably held by the clutch cover 30. The release shaft 53 is inclined rearward in the axial direction so that its upper end portion is positioned on a rear side of its lower end portion, when viewed in the axial direction (in a vehicle side view) of the main shaft 26. In the following description, the axial direction of the release shaft 53 will be simply referred to as the axial direction, unless otherwise specified. In addition, regarding the circumferential direction that circles around the axis line along the axial direction, a clockwise direction when viewed from above along the axial direction will be simply referred to as a clockwise direction, and a direction opposite to the clockwise direction will be referred to as a counterclockwise direction.

An upper portion of the release shaft 53 protrudes to the outside of the clutch cover 30. A driven clutch lever 58 is integrally and rotatably attached to an upper portion of the release shaft 53. The driven clutch lever 58 is coupled to the clutch lever through an operation cable.

A lower portion of the release shaft 53 is located inside the clutch cover 30. The lower portion of the release shaft 53 includes an eccentric cam portion 54. The eccentric cam portion 54 is engaged with a right end portion of the lifter shaft 52. The release shaft 53 rotates about the central axis C to move the lifter shaft 52 rightward with the action of the eccentric cam portion 54. The lifter shaft 52 is capable of reciprocating integrally with the pressure plate 44 of the clutch device 40. Therefore, when the lifter shaft 52 moves rightward, the pressure plate 44 moves rightward against the biasing force of the clutch spring 45. This releases the frictional engagement between the clutch plates 43 that are stacked. This brings the clutch device 40, which is a normally closed clutch, into a disconnection state in which the dynamic power cannot be transmitted.

FIG. 3 is a cross-sectional view illustrating the clutch control device according to the first embodiment. Note that FIG. 3 illustrates a cutting surface including the rotation axis of each rotation body included in the clutch actuator 60.

As illustrated in FIG. 3, the release shaft 53 is divided into a plurality of elements to be rotatable by individually receiving an input from the clutch actuator 60 and an input of an operation by the occupant. The release shaft 53 includes: an upper release shaft 55 (a first release shaft), which constitutes an upper portion of the release shaft 53; a lower release shaft 56 (a third release shaft), which constitutes a lower portion of the release shaft 53; and an intermediate release shaft 57 (a second release shaft). The intermediate release shaft 57 is disposed to overlap a lower end portion of the upper release shaft 55 and an upper end portion of the lower release shaft 56.

The upper release shaft 55 has a cylindrical shape. An upper end portion of the upper release shaft 55 protrudes outward from a unit case 70 of the clutch actuator 60. The driven clutch lever 58 is integrally and rotatably supported on an upper end portion of the upper release shaft 55. The upper release shaft 55 receives a force of the operation by the driver via a clutch lever or the like, and then rotates. A return spring is attached to the driven clutch lever 58. The return spring applies, to the driven clutch lever 58, biasing force in a direction opposite to the rotation (rotation in a clutch disconnection direction) in accordance with the operation on the clutch lever.

The lower release shaft 56 has a cylindrical shape. The lower portion of the lower release shaft 56 is located inside the clutch cover 30. A lower portion of the lower release shaft 56 is rotatably supported by the clutch cover 30. An eccentric cam portion 54 is formed in the lower release shaft 56 (see FIG. 2). A lower return spring is attached to a lower end portion of the lower release shaft 56. The lower return spring applies, to the lower release shaft 56, biasing force in a direction opposite to the rotation in a clutch disconnection direction. An upper portion of the lower release shaft 56 protrudes to the outside of the clutch cover 30 through the shaft insertion portion 36 of the clutch cover 30. The upper portion of the lower release shaft 56 faces the inside of a gear case 71 of the clutch actuator 60.

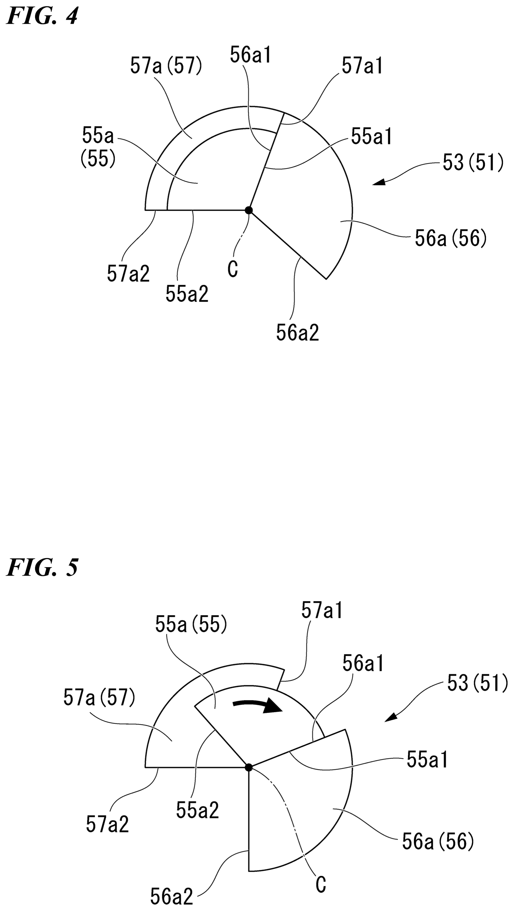

FIG. 4 is a cross-sectional view of the release shaft according to the first embodiment, and illustrates cams of the upper release shaft, the lower release shaft, and the intermediate release shaft.

As illustrated in FIGS. 3 and 4, a manual-side engaged portion 55a, which extends in the axial direction, is provided at the lower end portion of the upper release shaft 55. An engaging portion 56a, which extends in the axial direction, is provided at an upper end portion of the lower release shaft 56. The manual-side engaged portion 55a and the engaging portion 56a are each formed in a fan shape in cross-section. The manual-side engaged portion 55a and the engaging portion 56a overlap each other in the axial direction, and face each other in the circumferential direction. Accordingly, a first engaged surface 55a1, which faces a clockwise direction of the manual-side engaged portion 55a, presses a first engaging surface 56a1, which faces a counterclockwise direction of the engaging portion 56a, and is capable of rotating the lower release shaft 56 in the clockwise direction (see FIG. 5).

A second engaged surface 55a2, which faces the counterclockwise direction of the manual-side engaged portion 55a, and a second engaging surface 56a2, which faces the clockwise direction of the engaging portion 56a, are spaced apart from each other in the circumferential direction. In a case where there is an input into the lower release shaft 56 without the intervention of the upper release shaft 55, the lower release shaft 56 is capable of rotating in the clockwise direction independently of the upper release shaft 55.

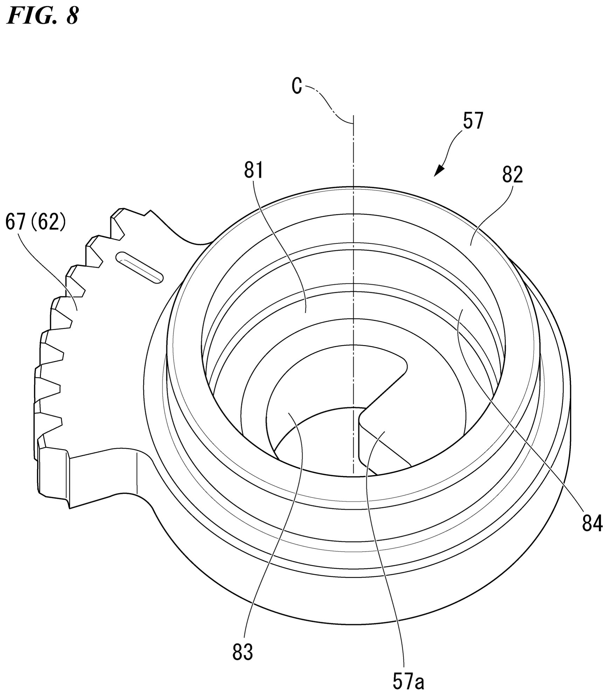

FIG. 8 is a perspective view illustrating the intermediate release shaft according to the first embodiment.

As illustrated in FIGS. 3 and 8, the intermediate release shaft 57 has a cylindrical shape. The intermediate release shaft 57 can be inserted into an engagement part between the lower end portion of the upper release shaft 55 and the upper end portion of the lower release shaft 56. The intermediate release shaft 57 includes: a circumferential wall 81 in which a first through hole 83 inserted by the lower release shaft 56 is formed; a bearing holder 82 in which a second through hole 84 continuous with the first through hole 83 is formed; and a control-side engaged portion 57a, which faces the engaging portion 56a of the lower release shaft 56 in the circumferential direction.

The circumferential wall 81 is formed in a cylindrical shape. The lower release shaft 56 is inserted into the inside of the circumferential wall 81, and protrudes upward. A lower half portion of the engaging portion 56a of the lower release shaft 56 is positioned in the first through hole 83.

The bearing holder 82 is formed in a cylindrical shape. The bearing holder 82 is continuous with to an upper end of the circumferential wall 81. The second through hole 84 directly communicates with the first through hole 83, and is also formed to be larger in diameter than the first through hole 83. In other words, the inner diameter of the bearing holder 82 is larger than the inner diameter of the circumferential wall 81. The inner circumferential surface of the bearing holder 82 is connected with the inner circumferential surface of the circumferential wall 81 via an annular stepped surface that faces upward. In the second through hole 84, a portion, which protrudes upward from the first through hole 83, of the lower release shaft 56 is positioned. A lower end portion of the upper release shaft 55 is positioned in the second through hole 84. That is, an upper half portion of the engaging portion 56a of the lower release shaft 56 and the manual-side engaged portion 55a of the upper release shaft 55 are positioned in the second through hole 84. A driven gear 67 to be described later is integrally formed with the bearing holder 82.

As illustrated in FIG. 3, a bearing 90 is held inside the bearing holder 82. The bearing 90 is a rolling bearing 90 (ball bearing). The bearing 90 rotatably holds the engaging portion 56a of the lower release shaft 56 and the manual-side engaged portion 55a of the upper release shaft 55 with respect to the intermediate release shaft 57. While being seated on the stepped surface, the bearing 90 is restricted from falling off from the inside of the bearing holder 82 by a C-ring 85, which is mounted on the inner circumferential surface of the bearing holder 82.

As illustrated in FIGS. 3 and 8, the control-side engaged portion 57a protrudes radially inward from the circumferential wall 81. The control-side engaged portion 57a extends in the axial direction, and is also formed in a fan shape in cross-section. The control-side engaged portion 57a is positioned below the manual-side engaged portion 55a of the upper release shaft 55. The control-side engaged portion 57a overlaps the engaging portion 56a of the lower release shaft 56 in the axial direction, and faces the engaging portion 56a in the circumferential direction.

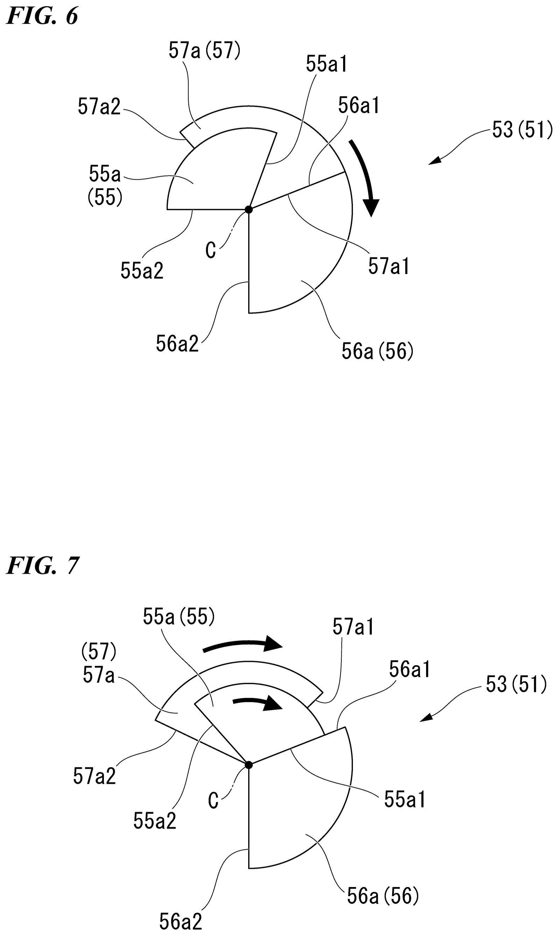

As illustrated in FIGS. 3 and 4, the control-side engaged portion 57a of the intermediate release shaft 57 and the engaging portion 56a of the lower release shaft 56 overlap each other in the axial direction, and face each other in the circumferential direction. Accordingly, the first engaged surface 57a1, which faces the clockwise direction, of the control-side engaged portion 57a, presses the first engaging surface 56a1 of the engaging portion 56a, and is capable of rotating the lower release shaft 56 in the clockwise direction (see FIG. 6).

The control-side engaged portion 57a avoids the manual-side engaged portion 55a of the upper release shaft 55 in the axial direction. Accordingly, the intermediate release shaft 57 is capable of driving the rotation of the lower release shaft 56 independently of the upper release shaft 55. In addition, the upper release shaft 55 is capable of driving the rotation of the lower release shaft 56 independently of the intermediate release shaft 57 (see FIG. 7).

A second engaged surface 57a2, which faces the counterclockwise direction, of the control-side engaged portion 57a and the second engaging surface 56a2 of the engaging portion 56a are spaced apart from each other in the circumferential direction. Accordingly, in a case where there is an input into the lower release shaft 56 without the intervention of the intermediate release shaft 57, the lower release shaft 56 is rotatable in the clockwise direction independently of the intermediate release shaft 57.

As illustrated in FIG. 3, the clutch actuator 60 controls actuation torque applied to the release shaft 53, and connects and disconnects the clutch device 40. The clutch actuator 60 is attached to an upper portion of the clutch cover 30. The clutch actuator 60 includes: a motor 61 as a drive source; a speed reduction mechanism 62, which transmits the driving force of the motor 61 to the release shaft 53; and the unit case 70, which accommodates the motor 61 and the speed reduction mechanism 62.

The motor 61 is, for example, a DC motor. The motor 61 is disposed so that the rotation axis of the rotor is along the axial direction of the release shaft 53. The motor 61 is disposed so that its rotation shaft 61a protrudes upward and downward. In one embodiment, the clutch actuator 60, which is a single constitution, includes a pair of motors 61. The pair of motors 61 are aligned in the front-rear direction. Control of the pair of motors 61 will be described later.

The speed reduction mechanism 62 decelerates the rotational power output from the motor 61, and transmits the rotational power to the release shaft 53. The speed reduction mechanism 62 includes a gear train 63. Each gear of the gear train 63 has a rotation axis along the axial direction. The gear train 63 includes: a driving gear 61b; a first reduction gear 64b; a first small-diameter gear 64c; a second reduction gear 65b; a second small-diameter gear 65c; a third reduction gear 66b; a third small-diameter gear 66c; and a driven gear 67.

The driving gear 61b is provided integrally with the rotation shaft 61a of each motor 61. The first reduction gear 64b is disposed between the two driving gears 61b. The first reduction gear 64b meshes with each driving gear 61b. The first reduction gear 64b decelerates the rotation of each driving gear 61b. The first small-diameter gear 64c is provided coaxially with the first reduction gear 64b. The second reduction gear 65b meshes with the first small-diameter gear 64c. The second reduction gear 65b decelerates the rotation of the first small-diameter gear 64c. The second small-diameter gear 65c is provided coaxially with the second reduction gear 65b. The third reduction gear 66b meshes with the second small-diameter gear 65c. The third reduction gear 66b decelerates the rotation of the second small-diameter gear 65c. The third small-diameter gear 66c is provided coaxially with the third reduction gear 66b. The driven gear 67 meshes with the second small-diameter gear 65c. The driven gear 67 decelerates the rotation of the second small-diameter gear 65c.

The first reduction gear 64b and the first small-diameter gear 64c are each provided to be integrally rotatable with a first support shaft 64a. The first reduction gear 64b, the first small-diameter gear 64c, and the first support shaft 64a constitute a first reduction shaft 64. The first reduction shaft 64 has a central axis along the axial direction.

The second reduction gear 65b and the second small-diameter gear 65c are each provided to be integrally rotatable with a second support shaft 65a. The second reduction gear 65b, the second small-diameter gear 65c, and the second support shaft 65a constitute a second reduction shaft 65. The second reduction shaft 65 has a central axis along the axial direction.

The third reduction gear 66b and the third small-diameter gear 66c overlap each other in the axial direction. The third reduction gear 66b and the third small-diameter gear 66c are integrally formed with each other. The third reduction gear 66b and the third small-diameter gear 66c are provided to be integrally rotatable with a third support shaft 66a. The third reduction gear 66b, the third small-diameter gear 66c, and the third support shaft 66a constitute a third reduction shaft 66. The third reduction shaft 66 has a central axis along the axial direction. The third reduction shaft 66 is provided with a rotation angle sensor 68, which detects a rotation angle of the third reduction shaft 66.

The third reduction shaft 66 is positioned on a front side of the second reduction shaft 65. The second reduction shaft 65 is positioned on a front side of the first reduction shaft 64. The release shaft 53 is provided on a front side of the third reduction shaft 66. The central axis C of the release shaft 53 and the central axes of the reduction shafts 64, 65, and 66 are aligned on an identical straight line that extends in the front-rear direction, when viewed in the axial direction.

The first support shaft 64a, the second support shaft 65a, and the third support shaft 66a are each rotatably supported by the unit case 70. The third reduction gear 66b is a fan-shaped gear with the third support shaft 66a as its center. The third reduction gear 66b is provided to enlarge on the front side of the third support shaft 66a.

The driven gear 67 is provided to be integrally rotatable with the intermediate release shaft 57 of the release shaft 53. The driven gear 67 is a fan-shaped gear with the release shaft 53 as its center. The driven gear 67 is provided to enlarge on the front side of the release shaft 53. The third reduction gear 66b and the driven gear 67 are formed in the fan-shaped gears, thereby enabling downsizing of the speed reduction mechanism 62 and the clutch actuator 60. That is, also in a case where a large-diameter reduction gear is provided in order to gain a reduction ratio, a portion other than a mesh range of the reduction gear is cut out to form a fan shape, so that protruding outward in the vehicle width direction of the speed reduction mechanism 62 can be particularly suppressed, and the weight of the speed reduction mechanism 62 can be reduced.

The speed reduction mechanism 62 connects the motor 61 with the release shaft 53 to be capable of interlocking all the time. In this manner, the clutch actuator 60 constitutes a system for directly connecting and disconnecting the clutch device 40.

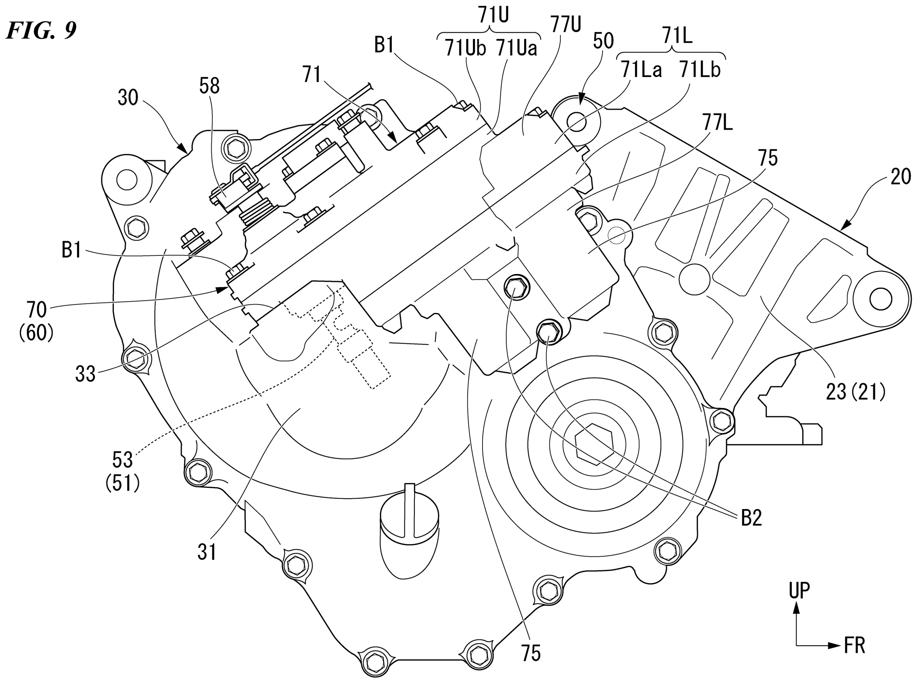

FIG. 9 is a right side view illustrating the clutch cover and the clutch actuator according to the first embodiment.

As illustrated in FIGS. 3 and 9, the unit case 70 is fixed to the clutch cover 30. The unit case 70 includes the gear case 71 and a motor case 75.

The gear case 71 rotatably supports the first support shaft 64a, the second support shaft 65a, and the third support shaft 66a. The gear case 71 accommodates the gear train 63. The gear case 71 is formed in upper and lower two stages in the axial direction. Hereinafter, an upper portion of the gear case 71 will be referred to as an upper stage portion 71U, and a lower portion of the gear case 71 will be referred to as a lower stage portion 71L. The upper stage portion 71U is shifted rearward along a plane orthogonal to the axial direction with respect to the lower stage portion 71L. The motor case 75, which extends along the axial direction, is continuous below the lower stage portion 71L.

The upper stage portion 71U has a rectangular shape elongated in the front-rear direction, when viewed in the axial direction. The upper stage portion 71U forms an upper stage gear housing chamber 72U. The upper stage gear housing chamber 72U houses the first small-diameter gear 64c, the second reduction gear 65b, the second small-diameter gear 65c, the third reduction gear 66b, the third small-diameter gear 66c, and the driven gear 67 of the gear train 63. The upper stage portion 71U of the gear case 71 is vertically divided into two parts with a division plane orthogonal to the axial direction as a boundary. Hereinafter, a lower portion of the upper stage portion 71U will be referred to as an upper stage portion main body 71Ua, and an upper portion of the upper stage portion 71U will be referred to as a case upper cover 71Ub. The upper stage portion main body 71Ua is opened upward. The case upper cover 71Ub closes an upper opening of the upper stage portion main body 71Ua from above.

The upper stage portion main body 71Ua rotatably supports a portion of the first reduction shaft 64 between the first reduction gear 64b and the first small-diameter gear 64c via a rolling bearing. The upper stage portion main body 71Ua rotatably supports a lower end of the second reduction shaft 65 via a rolling bearing. The upper stage portion main body 71Ua rotatably supports a lower end of the third reduction shaft 66 via a rolling bearing. The upper stage portion main body 71Ua rotatably supports a lower end (a circumferential wall) of the intermediate release shaft 57 via a rolling bearing.

The case upper cover 71Ub rotatably supports an upper end of the first reduction shaft 64 via a rolling bearing. The case upper cover 71Ub rotatably supports an upper end of the second reduction shaft 65 via a rolling bearing. The case upper cover 71Ub rotatably supports a portion, located above the third reduction gear 66b and the third small-diameter gear 66c, of the third reduction shaft 66 via a rolling bearing. The case upper cover 71Ub rotatably supports the upper release shaft 55 via a rolling bearing. The case upper cover 71Ub rotatably supports an upper end (the bearing holder) of the intermediate release shaft 57 via a bearing.

The lower stage portion 71L has an oval shape elongated in the front-rear direction, when viewed in the axial direction. The lower stage portion 71L forms a lower stage gear housing chamber 72L. The upper stage gear housing chamber 72U and the lower stage gear housing chamber 72L are partitioned by a partition wall. The lower stage gear housing chamber 72L houses the driving gear 61b and the first reduction gear 64b of the rotation shaft 61a of each motor 61 in the gear train 63. The lower stage portion 71L of the gear case 71 is vertically divided into two parts with a division plane orthogonal to the axial direction as a boundary. Hereinafter, an upper part of the lower stage portion 71L will be referred to as a lower stage portion main body 71La, and a lower part of the lower stage portion 71L will be referred to as a case lower cover 71Lb. The lower stage portion main body 71La is opened downward. The case lower cover 71Lb closes a lower portion of the lower stage portion main body 71La from below.

The motor case 75 forms a motor housing chamber 76, which houses the two motors 61. The motor housing chamber 76 houses two motors 61 each having a cylindrical shape to be aligned in parallel with each other. The motor case 75 has a bottomed cylindrical and oval shape in cross-section. A case lower cover 71Lb is integrally formed on an upper portion of the motor case 75 to enlarge its cross-sectional shape. The motor case 75 and the case lower cover 71Lb are integrally formed with each other to constitute a lower case body 77L.

The upper stage portion main body 71Ua and the lower stage portion main body 71La are integrally formed with each other to constitute an upper case body 77U. The case upper cover 71Ub is attached to the upper case body 77U from above, and the upper stage gear housing chamber 72U is formed between the upper case body 77U and the case upper cover 71Ub. The case lower cover 71Lb of the lower case body 77L is attached to the upper case body 77U from below, and the lower stage gear housing chamber 72L is formed between the upper case body 77U and the case lower cover 71Lb. The lower case body 77L and the upper case body 77U are positioned with each other via a pair of front and rear knock pins 79. A lower portion of each of the knock pins 79 is fitted into a holding hole of the lower case body 77L. An upper portion of each of the knock pins 79 is inserted into a fitting hole of the upper case body 77U.

As illustrated in FIG. 3, a first opening portion 73a and a second opening portion 73b, into which the release shaft 53 is inserted, are formed in the gear case 71. The first opening portion 73a faces the shaft insertion portion 36 of the clutch cover 30. The first opening portion 73a penetrates through the upper stage portion main body 71Ua in the axial direction. The gear case 71 receives the lower release shaft 56, which protrudes from the clutch cover 30, through the first opening portion 73a. The second opening portion 73b penetrates through the case upper cover 71Ub in the axial direction coaxially with the first opening portion 73a. The inner circumferential surface of the second opening portion 73b rotatably supports the upper release shaft 55 of the release shaft 53 in a state in which the release shaft 53 protrudes to the outside of the gear case 71 through the second opening portion 73b. The gear case 71 rotatably holds the intermediate release shaft 57 between the first opening portion 73a and the second opening portion 73b.

As illustrated in FIG. 9, the gear case 71 is fastened to the clutch cover 30 with a bolt B1 along the axial direction. The motor case 75 is fastened to the clutch cover 30 with a bolt B2 along a direction orthogonal to the axial direction.

When the clutch actuator 60 is attached to the clutch cover 30, the release shaft 53, which is linear, and in which the upper release shaft 55, the intermediate release shaft 57, and the lower release shaft 56 are coupled to each other, is formed.

### <Transmission System>

Here, regarding the motorcycle 1, the driver performs only the shift operation of the transmission 25 (foot operation on a shift pedal), and the connection and disconnection operation of the clutch device 40 is automatically performed with electric control in accordance with the operation on the shift pedal. That is, a so-called semi-automatic transmission system 100 (an automatic clutch transmission system) is employed for the motorcycle 1.

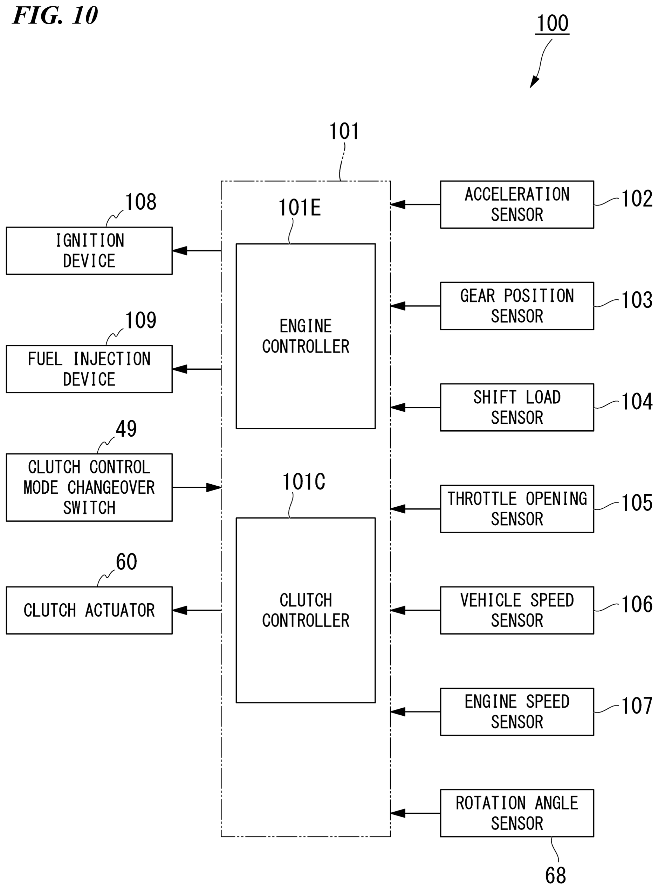

FIG. 10 is a block diagram of the transmission system according to the first embodiment.

As illustrated in FIG. 10, the transmission system 100 of the motorcycle 1 mainly includes: a controller 101; an acceleration sensor 102; a gear position sensor 103; a shift load sensor 104; a throttle opening sensor 105; a vehicle speed sensor 106; an engine speed sensor 107; an ignition device 108; and a fuel injection device 109, in addition to the clutch actuator 60.

The controller 101 controls the actuation of the ignition device 108 and the fuel injection device 109, and also controls the actuation of the clutch actuator 60. The control by the controller 101 is conducted, based on detection information from the acceleration sensor 102, the gear position sensor 103, and the shift load sensor 104 (for example, a torque sensor), and various types of vehicle state detection information from the throttle opening sensor 105, the vehicle speed sensor 106, the engine speed sensor 107, and the like.

The acceleration sensor 102 detects a behavior of a vehicle body. The gear position sensor 103 detects a gear position from the rotation angle of the shift drum 29b. The shift load sensor 104 detects operation torque that has been input into a shift spindle 29a (see FIG. 2) of the change mechanism 29. The throttle opening sensor 105 detects a throttle opening. The vehicle speed sensor 106 detects a vehicle speed. The engine speed sensor 107 detects a rotation speed of the engine.

The controller 101 includes a clutch controller 101C and an engine controller 101E, which are independent of each other. The clutch controller 101C mainly controls the driving of the clutch actuator 60. The engine controller 101E mainly controls the driving of the engine 21. The clutch controller 101C and the engine controller 101E are constituted as, for example, electronic control units (ECUs) that are separate from each other. The clutch controller 101C and the engine controller 101E may be constituted in an integrated ECU as long as they conduct control independently of each other. The clutch controller 101C and the engine controller 101E perform the control in coordination with each other in both cases where they are constituted separately from each other and where they are constituted integrally with each other.

The clutch controller 101C process an electric current value to be supplied to the motor 61 in order to connect and disconnect the clutch device 40, based on a preset processing program. The electric current supplied to the motor 61 is obtained from a correlation with torque output from the motor 61. The target torque of the motor 61 is proportional to actuation torque (driven clutch lever torque to be described later) applied to the release shaft 53. The electric current value supplied to the motor 61 is detected by an electric current sensor included in the clutch controller 101C. The actuation of the clutch actuator 60 is controlled in accordance with a change in detection value of the electric current sensor.

### <Clutch Control Mode>

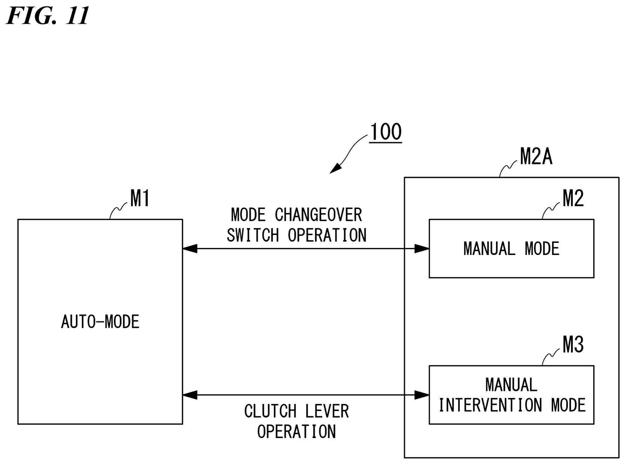

FIG. 11 is an explanatory diagram illustrating transition of a clutch control mode of the motorcycle according to the first embodiment.

As illustrated in FIG. 11, the transmission system 100 according to the present embodiment has three types of clutch control modes. The clutch control mode includes: an auto-mode M1 in which automatic control is performed; a manual mode M2 in which manual operation is performed; and a manual intervention mode M3 in which a temporary manual operation is performed. The clutch control mode appropriately transitions among the above three types of modes in accordance with the operation on a clutch control mode changeover switch 49 (see FIG. 11) and an operation on the clutch operation element. Note that a system including the manual mode M2 and the manual intervention mode M3 will be referred to as a manual system M2A.

The auto-mode M1 is a mode of controlling the clutch device 40, by processing a clutch capacity suitable for a traveling state in accordance with automatic start and shift control. The manual mode M2 is a mode of controlling the clutch device 40, by processing the clutch capacity in accordance with a clutch operation instruction from an occupant. The manual intervention mode M3 is a mode of controlling the clutch device 40, by receiving a clutch operation instruction from the occupant during the auto-mode M1, and processing the clutch capacity from the clutch operation instruction, and is a temporary manual operation mode. Note that in the manual intervention mode M3, for example, when a state in which the occupant stops operating the clutch operation element (a completely released state) continues for a prescribed period of time, the mode may be set to return to the auto-mode M1.

For example, at the time of activating the system, the transmission system 100 starts control from a clutch-on state (a connected state) in the auto-mode M1. In addition, the transmission system 100 is set to return to the clutch-on state in the auto-mode M1, when the engine 21 is stopped (when the system is turned off). In the clutch device 40, which is a normally closed clutch, the supply of electric power to the motor 61 of the clutch actuator 60 is not necessary, when the clutch is turned on. On the other hand, in a clutch-off state (a disconnected state) of the clutch device 40, the supply of electric power to the motor 61 is maintained.

In the auto-mode M1, the clutch control is basically conducted automatically. In the auto-mode M1, the motorcycle 1 is enabled to travel without a lever operation. In the auto-mode M1, the clutch capacity is controlled, based on the throttle opening, the engine speed, the vehicle speed, the shift sensor output, and the like. This enables the motorcycle 1 to start only with a throttle operation without an engine stall. In addition, it becomes possible to change the gear ratio of the motorcycle 1 only with a shift operation. Further, in the auto-mode M1, the mode is switched to the manual intervention mode M3, when the occupant grips the clutch lever.

In the manual mode M2, it is possible to control the clutch capacity with a lever operation by the occupant. That is, in the manual mode M2, it is possible to disconnect the clutch device 40 with the lever operation by the occupant. The auto-mode M1 and the manual mode M2 are mutually switchable. Such mode switching is conducted, for example, by operating the clutch control mode changeover switch 49 (see FIG. 10) while the motorcycle 1 is stopped and the transmission 25 is in neutral. Note that the transmission system 100 may include an indicator indicating a manual state at the time of transitioning to the manual system M2A (the manual mode M2 or the manual intervention mode M3).

In the manual mode M2, the clutch control is basically conducted manually. In the manual mode M2, the clutch capacity is controllable in accordance with an actuation angle of the clutch lever (that is, an actuation angle of the driven clutch lever 58). This enables control of connection and disconnection of the clutch device 40 in accordance with an intention of the occupant. Hereinafter, the actuation angle of the driven clutch lever 58 will be referred to as a driven clutch lever actuation angle.

In the auto-mode M1, the clutch actuator 60 automatically connects and disconnects the clutch device 40. In the auto-mode M1, by performing the manual clutch operation on the clutch lever, it becomes possible to temporarily intervene the manual operation in the automatic control of the clutch device 40 (the manual intervention mode M3).

### <Manual Clutch Operation>

As illustrated in FIG. 2, the clutch lever is coupled through an operation cable to the driven clutch lever 58, which is attached to the release shaft 53 of the clutch device 40. The driven clutch lever 58 is integrally and rotatably attached to an upper end portion of the release shaft 53.

In addition, for example, the clutch control mode changeover switch 49 is provided on a handlebar switch attached to a steering handlebar. This enables the occupant to easily switch the clutch control mode during normal driving.

### <2 Motor Control>

In one embodiment, the pair of motors 61 in the clutch actuator 60 may be constituted to cooperate with each other to drive the release shaft 53 (to connect and disconnect the clutch device 40). In this case, the weight (load) shared by each of the two motors 61 is halved, so that each motor 61 can be downsized. This increases the degree of freedom in the layout of the motors 61, as compared with a constitution in which the clutch actuator 60 includes a single motor 61. Therefore, also in a case where the clutch actuator 60 is disposed on an outside portion of the power unit 20, a protrusion to the outside in the vehicle width direction of the clutch actuator 60 is easily suppressed. Therefore, it becomes possible to substantially downsize the clutch actuator 60.

In one embodiment, in the clutch actuator 60, during normal time (at the time of non-failure), one of the plurality of (two) motors 61 may be used as a drive source of the release shaft 53, and the remaining one may be used for another purpose. For example, the remaining one motor 61 may be constituted not to be actuated for fail-safe, or may be used as an electric current sensor.

As described heretofore, the clutch control device 50 in the present embodiment includes: the engaging portion 56a, which overlaps the upper release shaft 55 and the intermediate release shaft 57 in the axial direction, and which face the upper release shaft 55 and the intermediate release shaft 57 in the circumferential direction; the lower release shaft 56, which individually receives the rotation of the upper release shaft 55 and the rotation of the intermediate release shaft 57, and which rotates and actuates the clutch device 40; and the bearing 90, which holds the engaging portion 56a. According to this constitution, the engaging portion 56a of the lower release shaft 56 is held by the bearing 90, and thus the bearing 90 is disposed to surround the engaging place between the upper release shaft 55 and the intermediate release shaft 57, and the lower release shaft 56. Therefore, the radial displacement of each of the release shafts 55 to 57 is restricted by the bearing 90, so that the collapse of the upper release shaft 55 and the intermediate release shaft 57 with respect to the lower release shaft 56 can be suppressed. This enables the rotation of the upper release shaft 55 to be efficiently transmitted to the lower release shaft 56. In addition, the rotation of the intermediate release shaft 57 can be efficiently transmitted to the lower release shaft 56. Therefore, it becomes possible to smoothly conduct mutual intervention of a manual connection and disconnection operation of the clutch device 40 for rotating the lower release shaft 56 via the upper release shaft 55 and an automatic connection and disconnection operation of the clutch device 40 for rotating the lower release shaft 56 via the intermediate release shaft 57.

The upper release shaft 55 includes the manual-side engaged portion 55a, which faces the engaging portion 56a in the circumferential direction. The bearing 90 holds the engaging portion 56a and the manual-side engaged portion 55a. According to this constitution, the collapse of the upper release shaft 55 with respect to the lower release shaft 56 can be effectively suppressed. Therefore, the rotation of the upper release shaft 55 can be efficiently transmitted to the lower release shaft 56, and the connection and disconnection operation of the clutch device 40 can be smoothly performed manually.

The intermediate release shaft 57 includes: the driven gear 67, which transmits the driving force from the clutch actuator 60; the control-side engaged portion 57a, which faces the engaging portion 56a in the circumferential direction; the circumferential wall 81, in which the first through hole 83 to be inserted by the lower release shaft 56, is formed; and the bearing holder 82 in which the second through hole (84) is formed, the second through hole (84) being continuous with the first through hole 83 and larger in diameter than the first through hole 83, and which holds the bearing 90 in its inside. According to this constitution, since the radial displacement of the intermediate release shaft 57 and the lower release shaft 56 is mutually restricted, it becomes possible to suppress the displacement of the intermediate release shaft 57 and the lower release shaft 56 from desired relative positions and actuation of them. Accordingly, mutual interference of the manual connection and disconnection operation and the automatic connection and disconnection operation of the clutch device 40 is suppressed, so that mutual intervention of the manual connection and disconnection operation and the automatic connection and disconnection operation of the clutch device 40 can be more smoothly performed. Further, the bearing 90 can be held between the upper release shaft 55 and the intermediate release shaft 57 through which the upper release shaft 55 is inserted, so that the clutch control device 50, which exhibits the above operation and effects, is obtainable without provision of a holding structure of the bearing in a casing or the like of the clutch control device 50.

Note that the power unit 20 in one embodiment can be constituted by replacing the clutch cover 30 and the release shaft 53 in a manual clutch type of power unit in which the connection and disconnection operation of the clutch device 40 is not performed with the electric control but is performed by an operation of the driver, and installing the clutch actuator 60 later. Therefore, the clutch actuator 60 is attachable to a power unit of a different model. Therefore, it becomes possible to easily constitute a semi-automatic transmission system 100 (an automatic clutch transmission system) by commonly using the clutch actuator 60 for lots of models.

### (Second Embodiment)

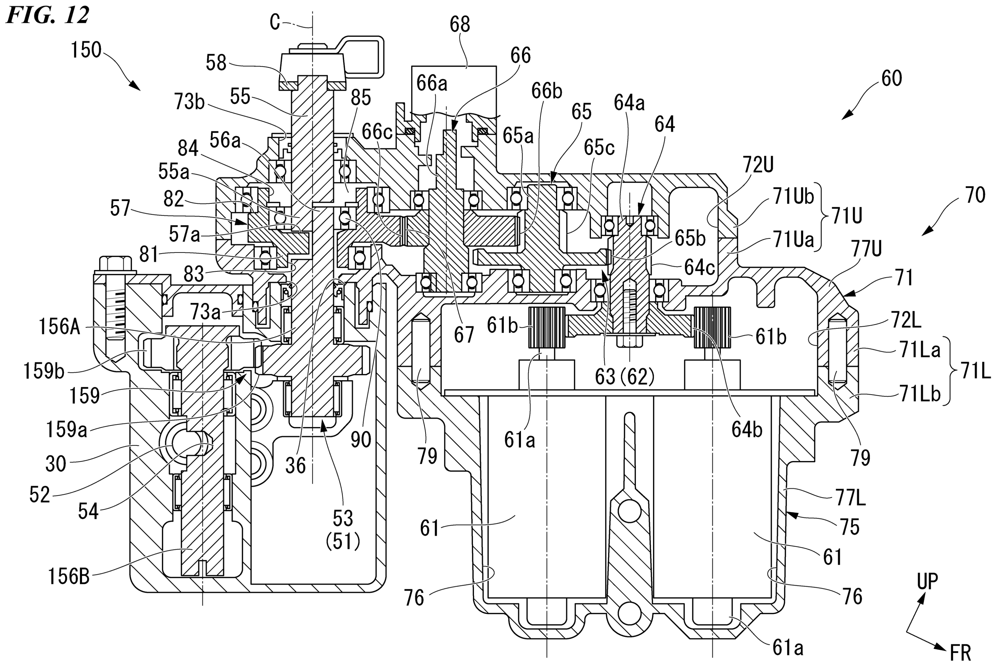

Next, a second embodiment will be described with reference to FIG. 12. A clutch control device 150 according to the second embodiment includes: a front stage release shaft 156A; a rear stage release shaft 156B; and a transmission unit 159, instead of the lower release shaft 56 according to the first embodiment. Note that constitutions other than those to be described below are similar to those according to the first embodiment.

FIG. 12 is a cross-sectional view illustrating a clutch control device according to the second embodiment.

As illustrated in FIG. 12, the front stage release shaft 156A and the rear stage release shaft 156B each have a central axis along a direction orthogonal to the vehicle width direction. The front stage release shaft 156A and the rear stage release shaft 156B are disposed in parallel with each other with their central axes shifted from each other. The front stage release shaft 156A and the rear stage release shaft 156B are rotatably supported by the clutch cover 30. An upper portion of the front stage release shaft 156A protrudes to the outside of the clutch cover 30. The entirety of the rear stage release shaft 156B is located inside the clutch cover 30.

The upper portion of the front stage release shaft 156A is constituted similarly to the upper portion of the lower release shaft 56 according to the first embodiment. That is, the engaging portion 56a is provided in the upper end portion of the front stage release shaft 156A. The lower portion of the rear stage release shaft 156B is constituted similarly to the lower portion of the lower release shaft 56 according to the first embodiment. That is, the lower portion of the rear stage release shaft 156B includes an eccentric cam portion 54.

The transmission unit 159 transmits the rotation of the front stage release shaft 156A to the rear stage release shaft 156B. The transmission unit 159 includes: a front stage gear 159a, which rotates integrally with the front stage release shaft 156A; and a rear stage gear 159b, which meshes with the front stage gear 159a, and which also rotates integrally with the rear stage release shaft 156B. Note that the tooth number ratio between the front stage gear 159a and the rear stage gear 159b is not particularly limited. The front stage gear 159a and the rear stage gear 159b are located inside the clutch cover 30.

When the clutch actuator is attached to the clutch cover 30, the upper release shaft 55, the intermediate release shaft 57, and the front stage release shaft 156A are linearly coupled to each other.

As described heretofore, according to the clutch control device 150 in the present embodiment, operation and effects similar to those in the first embodiment are obtained. In addition, in the present embodiment, the release shaft rotatably supported by the clutch cover 30 is constituted of the front stage release shaft 156A and the rear stage release shaft 156B, which are disposed in parallel with each other with the center axes shifted from each other. Accordingly, it becomes possible to optionally set the position of the clutch actuator 60, which includes the upper release shaft 55 and the intermediate release shaft 57 to be engaged with the front stage release shaft 156A, with respect to the lifter shaft 52. Therefore, the degree of freedom in the arrangement of the clutch actuator 60 can be improved.

The release mechanism 51 according to the embodiments is an eccentric cam mechanism, but the release mechanism 51 may be a mechanism including a rack and pinion, a feed screw, or the like. The mechanism for coupling the clutch lever and the driven clutch lever 58 is not limited to the operation cable, and may be a mechanism including a rod, a link, or the like.

The clutch actuator 60 according to the embodiments includes the pair of motors 61, but the clutch actuator 60 may include only one motor.

Additionally, it is possible to appropriately replace a constituent element in the above-described embodiments with a known constituent element without departing from the gist of the present invention.

### INDUSTRIAL APPLICABILITY

According to the above clutch control device, mutual intervention of the automatic connection and disconnection operation and the manual connection and disconnection operation of the clutch device is enabled smoothly.

### REFERENCE SIGNS LIST

40 Clutch device
50, 150 Clutch control device
53 Release shaft
55 Upper release shaft (first release shaft)
55a Manual-side engaged portion (first engaged portion)
56 Lower release shaft (third release shaft)
56a Engaging portion
57 Intermediate release shaft (second release shaft)
57a Control-side engaged portion (second engaged portion)
60 Clutch actuator
67 Gear
81 Circumferential wall
82 Bearing holder
83 First through hole
84 Second through hole
90 Bearing
150 Clutch control device
156A Front stage release shaft (third release shaft)

## Claims

1. A clutch control device comprising:
a clutch actuator (60) that outputs driving force for actuating a clutch device (40);
a clutch operation element on which a clutch operation by an occupant is performed; and
a release shaft (53) that transmits an input from at least one of the clutch actuator (60) and the clutch operation element to the clutch device (40), wherein
the release shaft (53) includes:
a first release shaft (55) that receives a force of the operation by a driver and then rotates;
a second release shaft (57) that receives an input from the clutch actuator (60) and then rotates; and
a third release shaft (56) including an engaging portion (56a) that overlaps the first release shaft (55) and the second release shaft (57) in an axial direction and that faces the first release shaft (55) and the second release shaft (57) in a circumferential direction, the engaging portion (56a) individually receiving rotation of the first release shaft (55) and rotation of the second release shaft (57), then rotating, and actuating the clutch device (40), and
the clutch control device further comprises a bearing (90) that holds the engaging portion (56a).

2. The clutch control device according to claim 1, wherein
the first release shaft (55) includes a first engaged portion (55a) that faces the engaging portion (56a) in the circumferential direction, and
the bearing (90) holds the engaging portion (56a) and the first engaged portion (55a).

3. The clutch control device according to claim 1 or 2, wherein
the second release shaft (57) includes:
a gear (67) that transmits the driving force from the clutch actuator (60);
a second engaged portion (57a) that faces the engaging portion (56a) in the circumferential direction;
a circumferential wall (81) in which a first through hole (83) to be inserted by the third release shaft (56) is formed; and
a bearing holder (82) in which a second through hole (84) is formed, the second through hole (84) being continuous with the first through hole (83) and larger in diameter than the first through hole (83), and which holds the bearing (90) thereinside.

## Amended claims

### Amended claims under Art. 19.1 PCT

1. A clutch control device comprising:
a clutch actuator (60) that outputs driving force for actuating a clutch device (40);
a clutch operation element on which a clutch operation by an occupant is performed; and
a release shaft (53) that transmits an input from at least one of the clutch actuator (60) and the clutch operation element to the clutch device (40), wherein
the release shaft (53) includes:
a first release shaft (55) that receives a force of the operation by a driver and then rotates;
a second release shaft (57) that receives an input from the clutch actuator (60) and then rotates; and
a third release shaft (56) including an engaging portion (56a) that overlaps the first release shaft (55) and the second release shaft (57) in an axial direction and that faces the first release shaft (55) and the second release shaft (57) in a circumferential direction, the engaging portion (56a) individually receiving rotation of the first release shaft (55) and rotation of the second release shaft (57), then rotating, and actuating the clutch device (40),
the clutch control device further comprises a bearing (90) that holds the engaging portion (56a), and
the second release shaft (57) includes:
a gear (67) that transmits the driving force from the clutch actuator (60);
a second engaged portion (57a) that faces the engaging portion (56a) in the circumferential direction;
a circumferential wall (81) in which a first through hole (83) to be inserted by the third release shaft (56) is formed; and
a bearing holder (82) in which a second through hole (84) is formed, the second through hole (84) being continuous with the first through hole (83) and larger in diameter than the first through hole (83), and which holds the bearing (90) thereinside.

2. The clutch control device according to claim 1, wherein
the first release shaft (55) includes a first engaged portion (55a) that faces the engaging portion (56a) in the circumferential direction, and
the bearing (90) holds the engaging portion (56a) and the first engaged portion (55a).

Statement under Art. 19.1 PCT
Brief Statement Under Article 19(1) of the Convention
 In claim 1 in of the claims, an amendment based on the wordings of claim 3 as filed was made. Therefore, no new matter is added.
